# EUROPEAN PATENT SPECIFICATION

(11) **EP 1 422 232 B1**
(45) Date of publication and mention of the grant of the patent: **09.03.2005**
(21) Application number: 02748879.0
(22) Date of filing: 11.07.2002
(51) Int. Cl.: C07F 9/40

(54) **METHOD OF OBTAINING CIS-1-PROPENYLPHOSPHONATE OF DITERBUTYL**
VERFAHREN ZUR HERSTELLUNG VON DI TERT.-BUTYL-CIS-1-PROPENYLPHOSPHONAT
PROCEDE D'OBTENTION DU CIS-1-PROPENYLPHOSPHONATE DE DITERBUTYLE

(30) Priority: 06.08.2001 ES 200101841
(43) Date of publication of application: 26.05.2004
(73) Proprietor: ERCROS Industrial S.A., 08014 Barcelona (ES)
(72) Inventor: ASENSIO DOMINGUEZ, Ramón, E-28300 Aranjuez (ES); DE LA CRUZ ESCUDERO, Angel, E-28300 Aranjuez (ES); DIAZ TEJO, Luis Angel, E-28300 Aranjuez (ES); ALONSO MARTINEZ, Quirino, E-28300 Aranjuez (ES)
(74) Representative: De Verdonces Llargués, Enrique
(86) International application number: PCT/ES2002/000345
(87) International publication number: WO 2003/014132

(56) References cited:
- US-A- 4 222 970
- DATABASE CA [Online] KEEFER ET AL.: 'Nickel-aluminum alloy as a reducing agent', XP002976839 Retrieved from STN Database accession no. 110:211679 & CHEMICAL REVIEWS vol. 89, 1989, pages 459 - 502

## Description

This invention relates to a process to synthesize an intermediate useful in the preparation of an antibiotic known as fosfomycin and/or its salts. This intermediate product is diterbutyl cis-1-propenylphosphonate.

### Background

Fosfomycin (Merck Index no. 4280, page 721, 12^{th} edition) is (-)-(1R, 2S)-(1,2-epoxypropyl)phosponic acid

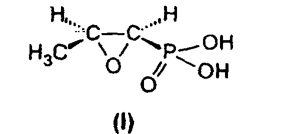

This compound, initially isolated from certain strains of the *Streptomyces* genus is useful, either as it is or in the form of salt, as an antibacterial agent in the treatment of infections caused by gram-positive and gram-negative germs. Its industrial production is currently carried out by chemical synthesis.

The usual methods of synthesis include obtaining an intermediate: diterbutyl propadienylphosphonate, which is hydrogenated to give diterbutyl cis-1 propenylphosphonate, which is subsequently converted into cis-1-propenylphosphonic acid liberating ter-butanol, followed by epoxidation with hydrogen peroxide in the presence of sodium tungstate to obtain cis-1,2-epoxypropylphosphonic acid, as a mixture of isomers. The optical resolution of the isomers is carried out by means of selective crystallization with (+)-α-phenylethylamine, obtaining the salt (+)-α-phenylethylammonium (-)-cis,-1,2-epoxypropylphosphonate.

The present invention relates to a new process to obtain diterbutyl cis-1-propenylphosphonate (II): 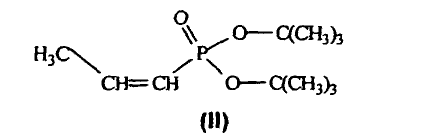 from diterbutyl propadienylphosphonate, (III):

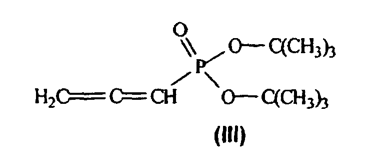

The methods disclosed, up to the present date, to carry out this reaction include catalytic hydrogenations, which are stereospecific. The patent ES 359,534 discloses catalytic hydrogenation as a method to obtain the intermediate (II). The examples are carried out with a 5% Pd/ C catalyst, using benzene as a solvent, although it also states that other catalysts can be used. This method has the drawbacks of the high toxicity of the benzene and the losses of the Pd catalysts caused, which, due to their high costs, has a serious economic disadvantage.

The patent US 4,222,970 discloses the preparation of the intermediate (II) from a benzene solution of compound (III) to which a methanol: water (1:1) mixture is added that contains hydrazine hydrate and a Ni-Raney catalyst with a yield higher than 90%. The high toxicity of benzene continues to make the industrial application of the process disclosed in this patent problematic. In addition, hydrazine is also a very toxic compound whose use should be avoided. Finally, the 90% yield attributed is insufficient for a reaction with these characteristics.

### Description of the invention

The present invention provides a process for the transformation of compound (III) in (II) by means of catalytic hydrogenation, which avoids the majority of the drawbacks of the processes disclosed up to the present date.

One aspect of this invention is to provide a process that avoids the use of benzene, using less toxic solvents such as toluene or methylene chloride as an alternative.

Another aspect of this invention is to provide the use of catalysts that contain nickel and aluminium, which can additionally contain other metals such as iron, molybdenum and chromium, which permit carrying out the abovementioned hydrogenation reaction, with high yields, short reaction times and gentle pressure and temperature conditions.

In the course of the research carried out, it has been found, surprisingly, that compound (III) dissolved in a suitable solvent (such as, e.g. toluene, methylene chloride) is transformed into compound (II) when it is made to react with H₂, in the presence of catalysts that contain nickel and aluminium, or catalysts what contain nickel, aluminium and other metals in smaller proportions. The reaction takes place quickly, generally in less than 1 hour and in gentle pressure and temperature conditions. The reaction yield is higher than 95%, and can even be higher than 98% in some conditions.

This process permits avoiding the drawbacks mentioned in the previous patents:
- Avoiding the use of benzene, a highly toxic solvent that belongs to class I of the International Conference Harmonisation (ICH), according to the 1999 supplement of European Pharmacopoeia, whose use should be avoided in pharmaceutical products.
- Also avoiding the use of hydrazine, which is a very toxic, potentially carcinogenic reagent.
- Permitting the use of catalysts that contain Ni-Al, which are much more economic that those of Pd.
- Permitting greater safety and economy in industrial installations, as the reaction takes place in gentle pressure and temperature conditions.

The process according to the invention is essentially the following: A quantity of Ni-Al catalyst is added to a solution of compound (III) in toluene, stirring sufficiently so that it is distributed homogeneously. The mixture is inerted with N₂ and a vacuum, and H₂ is passed through it, maintaining constant pressure and temperature conditions. The hydrogenation is carried out at a temperature between 10°C and 50°C, preferably between 15°C and 30°C; and at a pressure between 0.5-5 atm, preferably between 1-3 atm. The reaction generally ends after a time ranging from 10 to 90 minutes. The catalyst is recovered by filtering and can be used in successive reactions. The compound (II) formed can be transformed into fosfomycin or its salts following the abovementioned known methods.

In accordance with this invention, different types of catalysts that contain Ni, Al and which may contain other metals, with different characteristics as regards composition and particle size, can be used. In general larger particle size produces a reduction in reaction rate.

The following examples are intended to illustrate the invention but should not be understood as restrictive of it.

### Example 1

Add 8 g of a Ni-Al catalyst to a solution containing 112 g of diterbutyl propadienylphosphonate in 1000 ml of toluene. The catalyst contains at least 93% Ni, with a particle size of less than 80 µm. The mixture is inerted, and is heated to 30° C passing H₂ through it until a pressure of 2 atm is reached. The reaction ends after 18 minutes. 110 g of diterbutyl cis-1 propenylphosphonate is obtained, which means a yield of 98%. The reaction is monitored using infrared spectroscopy.

### Example 2

Add 16.5 g of a Ni-Al catalyst to a solution containing 230 g of diterbutyl propadienylphosphonate in 2000 ml of toluene. The catalyst contains at least 93% Ni, and a particle distribution of less than 200 µm. The mixture is inerted, and the temperature is maintained at 22°C passing H₂ through it until a pressure of 1.5 atm is reached. The reaction ends after 55 minutes. 226 g of diterbutyl cis-1 propenylphosphonate is obtained, which means a yield of 98%.

### Example 3

Add 8 g of a Ni-Al catalyst to a solution containing 60 g of diterbutyl propadienylphosphonate in 1000 ml of toluene. The catalyst contains at least 93% Ni and an average particle size of 27 µm. The mixture is inerted, and the temperature is maintained at 15° C passing H₂ through it until a pressure of 2.2 atm is reached. The reaction ends after 19 minutes. 58 g of diterbutyl cis-1 propenylphosphonate is obtained, which means a yield of 97%.

### Example 4

Add 16 g of a Ni-Al catalyst to a solution containing 232 g of diterbutyl propadienylphosphonate in 3000 ml of toluene. The dry catalyst contains at least 93% Ni and an average particle size of 42 µm. The mixture is inerted, and the temperature is maintained at 15° C passing H₂ through it until a pressure of 2 atm is reached. The reaction ends after 70 minutes. 225 g of diterbutyl cis-1 propenylphosphonate is obtained, which means a yield of 97%.

### Example 5

Add 7 g of a Ni-Al catalyst to a solution containing 112 g of diterbutyl propadienylphosphonate in 1000 ml of toluene. The catalyst contains 93% Ni. The mixture is inerted, and is heated to 30° C passing H₂ through it until a pressure of 2 atm is reached. The reaction ends after 50 minutes. 110 g of diterbutyl cis-1 propenylphosphonate is obtained, which means a yield of 98%.

### Example 6

Add 8 g of a Ni-Al catalyst to a solution containing 112 g of diterbutyl propadienylphosphonate in 1000 ml of toluene. The catalyst contains 93% Ni, and, in addition to Al contains Mo and Fe. The mixture is inerted, and is heated to 30° C passing H₂ through it until a pressure of 2 atm is reached. The reaction ends after 45 minutes. 109 g of diterbutyl cis-1 propenylphosphonate is obtained, which means a yield of 97%.

### Example 7

Add 8.5 g of a Ni-Al catalyst to a solution containing 112 g of diterbutyl propadienylphosphonate in 1000 ml of methylene chloride. The catalyst contains 93% Ni, and, in addition to Al contains Mo and Fe. The mixture is inerted, and is heated to 20° C passing H₂ through it until a pressure of 2.2 atm is reached. The reaction ends after 52 minutes. 107 g of diterbutyl cis-1 propenylphosphonate is obtained, which means a yield of 95%.

## Claims

1. A process to obtain diterbutyl cis-1 propenylphosphonate **characterized in that** it starts from diterbutyl propadienylphosphonate, and proceeds to reduce this with H₂ in the presence of Ni-Al catalysts

2. A process according to claim 1, **characterized in that** the solvent used in the reaction is toluene or methylene chloride.

3. A process according to claim 1, **characterized in that** the reaction temperature ranges from 10°C to 50°C, preferably from 15°C to 30°C.

4. A process according to claim 1, **characterized in that** the reaction takes place at a pressure between 0.5 and 5 atm, preferably between 1-3 atm.

5. A process according to claim 1, **characterized in that** the catalyst used contains nickel and aluminium, and can further contain other metals.

6. A process according to claim 5, **characterized in that** the nickel content of the catalyst is higher than 93%.

7. A process according to claim 5, **characterized in that** the aluminium content of the catalyst is less than 7%.

8. A process according to claim 5, **characterized in that** the catalyst contains other metals such as molybdenum, iron and chromium.

9. A process according to claim 5, **characterized in that** the particle size of the catalyst is less than 200 µm.

## Patentansprüche

1. Verfahren zur Gewinnung von Diterbutyl-cis-1-Propenylphosphonat, **dadurch gekennzeichnet, dass** es von Diterbutyl-Propadienylphosphonat ausgeht und dieses im weiteren mit H₂ in Anwesenheit von Ni-Al-Katalysatoren reduziert.

2. Verfahren nach Anspruch 1, **dadurch gekennzeichnet, dass** das in der Reaktion verwendete Lösemittel Toluen oder Methylenchlorid ist.

3. Verfahren nach Anspruch 1, **dadurch gekennzeichnet, dass** die Reaktionstemperatur von 10°C bis 50°C reicht, vorzugsweise von 15°C bis 30°C.

4. Verfahren nach Anspruch 1, **dadurch gekennzeichnet, dass** die Reaktion bei einem Druck zwischen 0,5 und 5 Atm stattfindet, vorzugsweise zwischen 1 und 3 Atm.

5. Verfahren nach Anspruch 1 m **dadurch gekennzeichnet, dass** der verwendete Katalysator Nickel und Aluminium enthält und zusätzlich auch noch andere Metalle enthalten kann.

6. Verfahren nach Anspruch 5, **dadurch gekennzeichnet, dass** der Nickelgehalt des Katalysators höher als 93% ist.

7. Verfahren nach Anspruch 5, **dadurch gekennzeichnet, dass** der Aluminiumgehalt des Katalysators weniger als 7% ist.

8. Verfahren nach Anspruch 5, **dadurch gekennzeichnet, dass** der Katalysator andere Metalle enthält, wie Molybdän, Eisen und Chrom.

9. Verfahren nach Anspruch 5, **dadurch gekennzeichnet, dass** die Partikelgrösse des Katalysators kleiner als 200 µm ist.

## Revendications

1. Procédé d'obtention du cis-1-propénylphosphonate de diterbutyle **caractérisé en ce qu'**il commence à partir de propadiénylphosphonate de diterbutyle, et procédé pour réduire celui-ci avec de l'H₂ en présence de catalyseurs de Ni-Al.

2. Procédé selon la revendication 1, **caractérisé en ce que** le solvant utilisé dans la réaction est le toluène ou le chlorure de méthylène.

3. Procédé selon la revendication 1, **caractérisé en ce que** la température de la réaction est comprise dans la plage allant de 10 °C à 50 °C, de préférence de 15 °C à 30 °C.

4. Procédé selon la revendication 1, **caractérisé en ce que** la réaction a lieu à une pression comprise dans la plage allant de 0,5 à 5 atm, de préférence de 1 à 3 atm.

5. Procédé selon la revendication 1, **caractérisé en ce que** le catalyseur utilisé contient du nickel et de l'aluminium, et peut en outre contenir d'autres métaux.

6. Procédé selon la revendication 5, **caractérisé en ce que** la teneur en nickel du catalyseur est supérieure à 93 %.

7. Procédé selon la revendication 5, **caractérisé en ce que** la teneur en aluminium du catalyseur est inférieure à 7 %.

8. Procédé selon la revendication 5, **caractérisé en ce que** le catalyseur contient d'autres métaux tels que le molybdène, le fer et le chrome.

9. Procédé selon la revendication 5, **caractérisé en ce que** la taille des particules de catalyseur est inférieure à 200 µm.
